# EUROPEAN PATENT APPLICATION

(11) **EP 3 943 865 A1**
(43) Date of publication of application: **26.01.2022**
(21) Application number: 20461549.6
(22) Date of filing: 23.07.2020
(51) Int. Cl.: F28D 21/00

(54) **A HEAT EXCHANGER ASSEMBLY**

(71) Applicant: Valeo Autosystemy SP. Z.O.O., 32-050 Skawina (PL)
(72) Inventor: PAWLAK, Damian, 32 050 Skawina (PL); FAJKIS, Michal, 32 050 Skawina (PL)
(74) Representative: Valeo Systèmes Thermiques

(57) **Abstract**

A heat exchanger assembly (100, 100a) includes at least one heat exchanger (110) and a protection grid (140, 140a). The heat exchanger (110) includes a first manifold (120a), a second manifold (120b) and a plurality of tubes (130). The plurality of tubes (130) are deployed parallel to each other between the first manifold (120a) and the second manifold (120b). The plurality of tubes (130) configure fluid communication between the first manifold (120a) and the second manifold (120b). The protection grid (140, 140a) protects the heat exchanger (110a) against damage from impact of an article. The protection grid (140, 140a) includes an inner face (142a), an outer face (142b) opposite to the inner face (142a). The inner face (142a) is fixed directly to the heat exchanger (110).

## Description

The present invention relates to a heat exchanger assembly for a vehicle, particularly, to a heat exchanger assembly that includes at least one heat exchanger and a protective grid.

A vehicle usually includes one or more heat exchangers such as, for example, a radiator to cool an engine of the vehicle by a coolant cooled by air flowing across the radiator. For achieving draft of air across radiator core, the radiator core is disposed behind a front grill of the vehicle, wherein the front grill may be disposed between a front hood and a front bumper of the vehicle such that the ram air impinges on the front grille of the vehicle as the vehicle moves forward. Such strategic placement of the radiator core enables the ram air to impinge on and pass through the radiator core disposed behind the front grille as the vehicle moves ahead. The radiator may be disposed either alone or in series with other heat exchange elements such as for example, a condenser and a chiller that require draft of air for efficient operation thereof. The sequence in which the radiator, condenser and chillers are disposed may vary, for example, sometimes the radiator is at the front to first receive the ram air, and otherwise, the condenser is at the front to first receive the ram air. The position of the different types of heat exchangers may therefore interchange.

Sometimes, heavier articles such as stones or gravel may cross the front grille and strike the radiator and/or condenser core disposed behind the front grille. The impact of heavier articles may cause damage to the radiator and/or condenser core, thereby causing leakage of the heat exchange fluid from the radiator and/or condenser core. The leakage of the heat exchange fluid deteriorates efficiency and performance of the radiator and/or condenser. Further, high-speed ram air often carries therewith, lighter articles such as paper, empty polythene bags, leaves and the likes that may cross the front grille and reach a front face of the radiator and/or condenser core. Such lighter articles when struck over the front face of the radiator and / or condenser core prevent the ram air from reaching the heat exchanger core and deteriorate the efficiency and performance of the radiator and/or condenser. Generally a protective grid is disposed upstream of the radiator and/or condenser core in direction of ram air to protect the radiator and/or condenser core against impact of heavier articles such as stone and gravel projected thereat and also prevent the lighter articles from obstructing air flow to the radiator and/or condenser core.

However, the protective grid of the heat exchanger assembly is generally of high strength plastic material of high weight to strength ratio that renders the protective grid heavier and expensive. The use of heavier protective grid of plastic material contributes to increase in vehicle weight and vehicle emissions and reducing fuel economy of the vehicle. The protective grid is mounted on the heat exchanger, particularly, to water tanks of the heat exchanger using clips. The protective grid with the clips configured thereon are formed by injection moulding that involves high tooling costs and is complicated. Further, such mounting arrangement for mounting the protective grid on the heat exchanger is unreliable and fails to securely mount the protective grid on the heat exchanger considering the vibrations to which the heat exchanger assembly is prone to due to the vehicle traversing on different terrains.

Accordingly, there is a need for a heat exchanger assembly with a protective grid for a heat exchanger that is comparatively lighter and inexpensive than conventional protection grids of high strength plastic material and as such contributes less to vehicle weight and emissions.

An object of the present invention is to provide a heat exchanger assembly with a protective grid for a heat exchanger that that protects heat exchanger core such as radiator and/or condenser core against impact of heavier articles such as stone and gravel projected thereat.

Another object of the present invention is to provide a heat exchanger assembly with a protective grid that can be securely and conveniently mounted on a heat exchanger of the heat exchanger assembly.

Yet another object of the present invention is to provide a heat exchanger assembly with a protective grid for a heat exchanger that prevents lighter articles such as paper, polythene bags and leaves from obstructing ram air approaching the heat exchanger core.

Still another object of the present invention is to provide a heat exchanger assembly with a protective grid for a heat exchanger that can be easily retrofitted over existing heat exchangers without requiring many modifications in the heat exchangers.

Another object of the present invention is to provide a heat exchanger assembly with a protective grid for a heat exchanger that enhances service life of a heat exchanger and reduces maintenance thereof.

Yet another object of the present invention is to provide a heat exchanger assembly with a protective grid for a heat exchanger that is convenient to manufacture, assemble and use.

In the present description, some elements or parameters may be indexed, such as a first element and a second element. In this case, unless stated otherwise, this indexation is only meant to differentiate and name elements which are similar but not identical. No idea of priority should be inferred from such indexation, as these terms may be switched without betraying the invention. Additionally, this indexation does not imply any order in mounting or use of the elements of the invention.

A heat exchanger assembly is disclosed in accordance with an embodiment of the present invention. The heat exchanger assembly includes at least one heat exchanger and a protection grid. The heat exchanger includes a first manifold, a second manifold and a plurality of tubes. The plurality of tubes are deployed parallel to each other between the first manifold and the second manifold. The plurality of tubes configure fluid communication between the first manifold and the second manifold. The protection grid protects the heat exchanger against damage from impact of an article. The protection grid includes an inner face, an outer face opposite to the inner face. The inner face is fixed directly to the heat exchanger.

Generally, the protection grid includes a rectangular frame, a plurality of horizontal ribs and at least one reinforcement rib located inside the rectangular frame.

Particularly, the reinforcement rib is secured to and is either vertically or angularly disposed with respect to the plurality of horizontal ribs.

Generally, the rectangular frame is of same thickness as the horizontal rib or the reinforcement rib, wherein thickness is measured parallelly with respect to the general plane formed either by the inner face (142a) or the outer face (142b).

Alternatively, the rectangular frame is of thickness that is greater than the thicknesses of the horizontal rib or the reinforcement rib.

In accordance with one embodiment of the present invention, the rectangular frame is of thickness that is greater than the sum of thicknesses of the horizontal rib and the reinforcement rib.

Particularly, spacing between adjacent horizontal ribs corresponds to spacing between adjacent tubes.

Generally, the horizontal ribs overlap the adjacent tubes.

In accordance with an embodiment of the present invention, the frame at least partially overlaps the ends of the tubes.

In accordance with another embodiment, the frame at least partially overlap the manifolds.

Specifically, the tubes, the first manifold and the second manifold of the heat exchanger and the protection grid are of metal.

More specifically, the tubes, the first manifold and the second manifold of the heat exchanger and the protection grid are of either aluminum or aluminum alloy.

Generally, at least one of the horizontal ribs is aligned to and brazed to at least one of the corresponding tubes to secure the protection grid over the heat exchanger.

Alternatively, the frame is brazed to at least one of the first manifold, the second manifold and at least one of the tubes to secure the protection grid over the heat exchanger.

Further, the frame includes at least one pair of tabs disposed on opposite sides thereof that engages with corresponding engagement elements configured on at least one of the first manifold and the second manifold to position and securely mount the protection grid over the heat exchanger.

Alternatively, the at least one pair of tabs is engageably received within space between adjacent tubes to position and securely mount the protection grid over the heat exchanger.

Other characteristics, details and advantages of the invention can be inferred from the description of the invention hereunder. A more complete appreciation of the invention and many of the attendant advantages thereof will be readily obtained as the same becomes better understood by reference to the following detailed description when considered in connection with the accompanying figures, wherein:
The present invention envisages a heat exchanger assembly for use in vehicles. The heat exchanger assembly includes at least one heat exchanger and a protection grid. The heat exchanger includes a first manifold, a second manifold and a plurality of heat exchange tubes connecting and configuring fluid communication between the first manifold and the second manifold. The protection grid is of metal and includes an inner face and an outer face opposite to the inner face. The inner face is brazed to the first manifold and the second manifold at opposite sides thereof. The protection grid being upstream of the heat exchanger in direction of ram air, protects the heat exchanger against damage from impact of an article. Although the present invention is explained with example of the heat exchanger assembly for use in vehicle and that includes a heat exchanger and a protection grid, wherein the protection grid is required to comparatively lighter, inexpensive, reliably and conveniently secured over the heat exchanger as compared to conventional protection grid of plastic material. However, the heat exchanger assembly is applicable for any applications other than vehicle applications.
**FIG. 1** illustrates an isometric view of a heat exchanger assembly in accordance with an embodiment of the present invention;
**FIG. 2** illustrates an isometric view of a protection grid in accordance with another embodiment of the present invention, wherein the protection grid is without tabs;
**FIG. 3** illustrates an isometric view of a protection grid in accordance with another embodiment of the present invention, wherein the protection grid is with tabs;
**FIG. 4** illustrates an isometric view of a heat exchanger assembly in accordance with another embodiment of the present invention; and
**FIG. 5** illustrates an isometric view of the protection grid of the heat exchanger assembly of **FIG. 3****.**

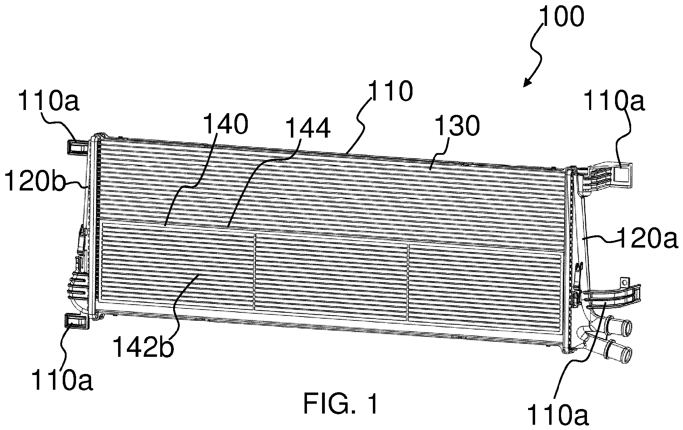

**FIG. 1** illustrates an isometric view of a heat exchanger assembly **100** in accordance with an embodiment of the present invention. The heat exchanger assembly **100** may include, inter alia, at least one heat exchanger **110** and a protection grid **140.** The heat exchanger **110** may be at least one of radiator, condenser and chiller that is mounted on the vehicle using mounting brackets **110a** configured thereon. The heat exchanger **110** may be located behind a front grill of the vehicle. The front grill is usually disposed between a front hood and a front bumper of the vehicle. Such strategic placement of the heat exchanger **110** enables the ram air to impinge on and pass through the heat exchanger **110** located behind the front grille as the vehicle moves ahead to undergo heat exchange with a heat exchange fluid flowing through heat exchange tubes of the heat exchanger **110.** The heat exchanger **110** includes a first manifold **120a,** a second manifold **120b** and a plurality of tubes **130.** The plurality of tubes **130** are deployed parallel to each other between the first manifold **120a** and the second manifold **120b.** The plurality of tubes **130** configure fluid communication between the first manifold **120a** and the second manifold **120b.**

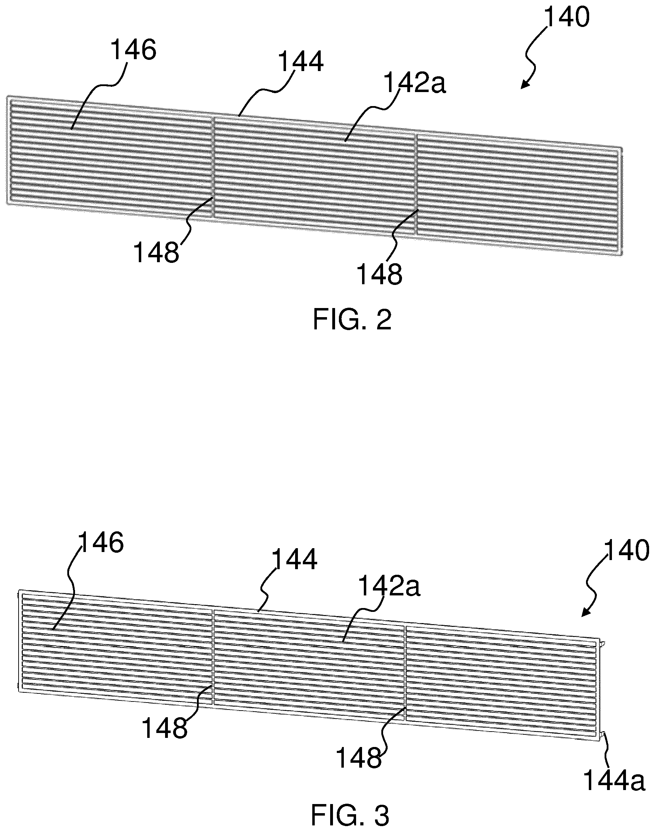

**FIG.** 2 illustrates an isometric view of the protection grid **140** of the heat exchanger assembly **100** in accordance with an embodiment of the present invention, wherein the protection grid **140** is without tabs. The protection grid **140** includes an inner face **142a** and an outer face **142b.** The outer face **142b** is opposite to the inner face **142a.** Specifically, the inner face **142a** and the outer face **142b** are facing in opposite direction. More specifically, the inner face **142a** is facing the heat exchanger **110** whereas the outer face **142b** is facing ram air. The protection grid **140** may include a rectangular frame **144** and a plurality of horizontal ribs **146** and at least one reinforcement rib **148** located inside the rectangular frame **144.** The protection grid **140** is disposed upstream of the heat exchanger **110** in the direction of the ram air. The inner face **142a** of the protection grid **140** is fixed directly to the heat exchanger **110** either by brazing the inner face **142a** to the heat exchanger **110** or by mounting the protection grid **140** over the heat exchanger **110** by using tabs **144a** as illustrated in **FIG. 3****.** Accordingly, the protection grid **140** protects at least a portion of the heat exchanger **110** against damage from impact of a heavier article such as stone or gravel. Referring to the accompanying **FIGS,** the protection grid **140** is depicted covering a lower section of the heat exchanger **110,** however, the protection grid **140** may be disposed in any manner relative to the heat exchanger **110** to cover and protect any portion of the heat exchanger **110** that is prone to impact of heavier articles. The plurality of horizontal ribs **146** are so spaced with respect to each other that spacing between the plurality of horizontal ribs **146** prevents heavier article such as stones or gravel from passing through the protection grid **140** but allows air to flow through the spacing. The spacing between the adjacent horizontal ribs **146** corresponds to spacing between adjacent tubes **130.** Generally, the horizontal ribs **146** overlaps the adjacent tubes **130.** The horizontal ribs **146** are aligned with the tubes **130** such that spacing between the adjacent horizontal ribs **146** are aligned with the spacing between the adjacent tubes **130,** as the protection grid **140** is secured over the heat exchanger **110.** With such configuration, the protection grid does not obstruct ram airflow across the tubes **130.** The reinforcement rib **148** may be directly connected to the plurality of horizontal ribs **146** to provide reinforcement thereto and maintain the spacing between the horizontal ribs **146.** The reinforcement rib **148** is either vertically or angularly disposed with respect to the plurality of horizontal ribs **146.** Generally, the rectangular frame **144** of the protection grid **140** is of same thickness as the horizontal rib **146** or the reinforcement rib **148,** wherein thickness is measured parallelly with respect to the general plane formed either by the inner face **142a** or the outer face **142b.** The term "thicker" may be interpreted as the relative thickness of the frame **144** measured in a plane parallel either to the inner face **142a** or the outer face **142b** is greater than the relative thickness of any rib **146** measured in the same plane as said faces **142a, 142b.** In order to provide further reinforcement to the protection grid **140,** the rectangular frame **144** is of thickness that is greater than the thicknesses of the horizontal rib **146** or the reinforcement rib **148.** In accordance with another embodiment of the present invention, the rectangular frame **144** is of thickness greater than the sum of thicknesses of the horizontal rib **146** and the reinforcement rib **148.** However, present invention is not limited to any particular thickness of the rectangular frame **144** as far as the rectangular frame is capable of providing reinforcement to the protection grid **140.** In accordance with an embodiment of the present invention, the frame **144** at least partially overlaps the ends of the tubes **130.** In accordance with another embodiment of the present invention, the frame **144** at least partially overlap the manifolds **120a, 120b.** Further, the configuration of the protection grid **140** is such that the protection grid **140** selectively allows passage of air there through but prevents stones and gravel from reaching the heat exchanger **110.** The protection grid **140** includes an inner face **142a** and an outer face **142b** opposite to the inner face **142a.** The protection grid **140** may optionally include additional tabs **144a** configured at the corners thereof to position and securely mount the protection grid **140** over the heat exchanger **110.**

Regarding securing of the protection grid **140** over the heat exchanger **110,** the protection grid **140** may be brazed to the heat exchanger **110.** Specifically, the inner face **142a** of the protection grid **140** is brazed to the heat exchanger **110** of the heat exchanger assembly **100.** More specifically, the protection grid **140** as well as the tubes **130,** the first manifold **120a** and the second manifold **120b** of the heat exchanger **110** are of metal, such as for example aluminum alloy. At least one of the horizontal ribs **146** is aligned to and brazed to at least one of the corresponding tubes **130** to secure the protection grid **140** over the heat exchanger **110.** With such securing of the protection grid **140** over the heat exchanger **110,** the protection grid **140** does not obstruct airflow across the tubes **130** of the heat exchanger **110.** Particularly, clad is applied over at least one of the inner face **142a** of the protection grid **140** and the heat exchanger **110** to achieve brazing there between. More particularly, clad is applied over at least one of the horizontal ribs **146** of the protection grid **140** and the corresponding tubes **130** of the heat exchanger **110** and subjected to brazing in brazing furnace to achieve brazing there between. Alternatively, the frame **144** is aligned with respect to and brazed to at least one of the first manifold **120a** and the second manifold **120b.** More specifically, clad is applied over at least one of the frame **144,** the first manifold **120a** and the second manifold **120b** and subjected to brazing in brazing furnace to achieve brazing between the frame **144** and at least one of the first manifold **120a** and the second manifold **120b.** In another embodiment, the the frame **144** is brazed to at least one of the tubes **130** to secure the protection grid **140** over the heat exchanger **110.** More specifically, clad is applied over at least one of the frame **144** and the tubes **130** and subjected to brazing in brazing furnace to achieve brazing between the frame **144** and the tubes **130.** The brazing between the protection grid **140** and the heat exchanger **110** can happen along with the brazing between other elements of the heat exchanger **110,** when the other elements of the heat exchanger **110** are being brazed in a brazing furnace. According, with use of brazing for securing the protection grid **140** to the heat exchanger **110,** one assembly step is eliminated. Further, as the protection grid **140** is brazed to the heat exchanger **110** of the heat exchanger assembly, the heat exchanger **110** do not require any engaging elements to be configured thereon to mount the protection grid **140** thereon. Further, the protection grid **140** is comparatively thinner than the plastic protection grid used in conventional heat exchanger assembly. Accordingly, the addresses the heat exchanger assembly **110** of the present invention addresses the packaging issues faced by the conventional heat exchanger assembly.

Further, such protection grid **140** obviates the drawbacks associated with conventional protection grids of plastic material that are generally of heavier plastic materials to impart strength to the conventional protection grids. Specifically, the protection grid **140** for the heat exchanger assembly **100** is of aluminum /aluminum alloy that exhibits comparatively higher strength to weight ratio than plastics and as such is comparatively lighter. Accordingly, the protection grid **140** contributes lesser to emissions and overall weight of the vehicle. The protective grid **140** being comparatively lighter than the conventional protective grids of plastic also improves fuel economy of the vehicle. The protection grid **140** is simple in construction and cost effective compared to the protection grid formed of plastic that includes tabs integrally formed thereon and that is formed by injection molding that involve high tool costs. Moreover, brazing of the protection grid **140** to the heat exchanger **110** enables convenient and reliable securing of the protection grid **140** over the heat exchanger **110** as compared to mounting conventional protection grids of plastic material over the heat exchanger using tabs. Moreover, the protection grid **140** provides enhanced protection to the heat exchanger **110** when compared to protection grid of plastic material. For such enhanced protection using metallic material may be advantageous over synthetic one. The protection grid of synthetic material is vulnerable to mechanical damage, such as cracks and fragmenting of protecting ribs, whereas the protection grid **140** of metallic material is more likely to be deformed, without fragmenting the structure thereof, thus the protection grid **110** of metal is more rigid to impact. Consequently, the risk of leakage of the heat exchanger **110** due to stone impact is significantly reduced.

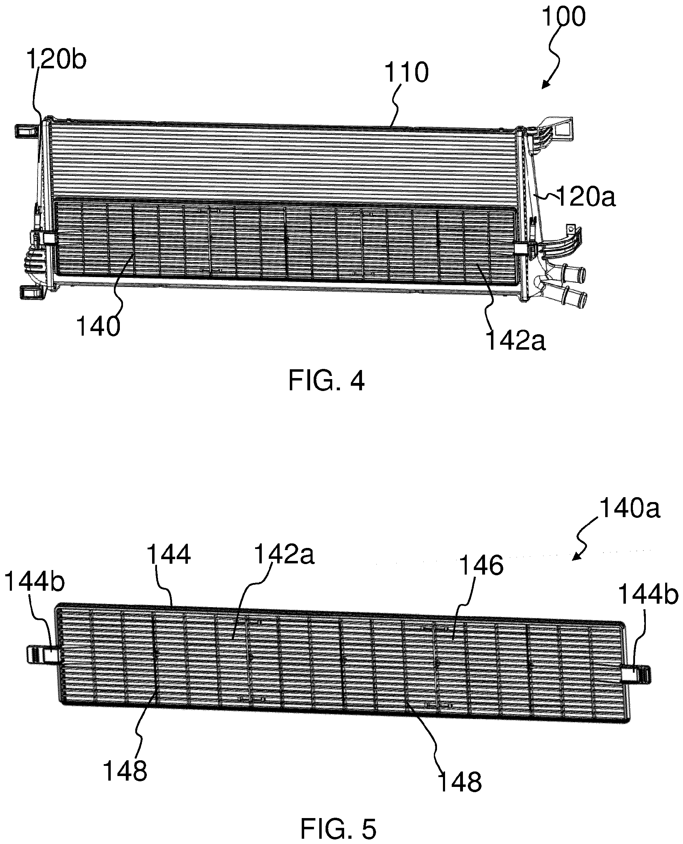

**FIG. 4** illustrates an isometric view of a heat exchanger assembly **100a** in accordance with an embodiment of the present invention. Similar to the heat exchanger assembly **100,** the heat exchanger assembly **100a** also includes at least one heat exchanger **110** and a protection grid **140a.** The heat exchanger **110** of the heat exchanger assembly **100a** is structurally and functionally similar to the heat exchanger of the heat exchanger assembly **100** disclosed above and for the sake of brevity of the present document is not described in details. **FIG. 5** illustrates an isometric view of the protection grid **140a.** The protection grid **140a** of the heat exchanger assembly **110a** is also of aluminum alloy instead of plastic, however, the protection grid **140a** includes tabs **144b** for mounting the protection grid **140a** over the heat exchanger **110a** instead of brazing the two. As such, the protection grid **140a** is different from the protection grid **140** of the heat exchanger assembly **110.** Specifically, the tabs **144b** engage with corresponding complimentary engagement elements formed on the heat exchanger **110a** to enable mounting of the protection grid **140a** over the heat exchanger **110a.** The tabs **144b** for mounting the protection grid **140a** over the heat exchanger **110a** are generally configured on opposite sides of the protection grid **140a.** More specifically, the frame **144** includes at least one pair of tabs **144b** disposed on opposite sides thereof. The pair of tabs **144b** engages with corresponding engagement elements configured on at least one of the first manifold **120a** and the second manifold **120b** to position and securely mount the protection grid **140a** over the heat exchanger **110.** Alternatively, the pair of tabs **144b** are engageably received within space between the adjacent tubes **130** to position and securely mount the protection grid **140a** over the heat exchanger **110.**

Several modifications and improvement might be applied by the person skilled in the art to the heat exchanger assembly **100** as defined above, and such modifications and improvements will still be considered within the scope and ambit of the present invention, as long as the heat exchanger assembly includes at least one heat exchanger and a protection grid. The heat exchanger includes a first manifold, a second manifold and a plurality of tubes. The plurality of tubes are deployed parallel to each other between the first manifold and the second manifold. The plurality of tubes configure fluid communication between the first manifold and the second manifold. The protection grid protects the heat exchanger against damage from impact of an article. The protection grid includes an inner face, an outer face opposite to the inner face. The inner face is fixed directly to the heat exchanger.

## Claims

1. A heat exchanger assembly (100, 100a) comprising:
• at least one heat exchanger (110) comprising:
∘ a first manifold (120a);
∘ a second manifold (120b); and
∘ a plurality of tubes (130) deployed parallel to each other between the first manifold (120a) and the second manifold (120b), the plurality of tubes (130) adapted to configure fluid communication between the first manifold (120a) and the second manifold (120b); and
• a protection grid (140, 140a) adapted to protect the heat exchanger (110) against damage from impact of an article, wherein the protection grid (140, 140a) comprising an inner face (142a), an outer face (142b) opposite to the inner face (142a),
**characterized in that** the inner face (142a) is fixed directly to the heat exchanger (110).

2. The heat exchanger assembly (100, 100a) as claimed in the previous claim, wherein the protection grid (140, 140a) comprises a rectangular frame (144), a plurality of horizontal ribs (146) and at least one reinforcement rib (148) located inside the rectangular frame (144).

3. The heat exchanger assembly (100, 100a) as claimed in the previous claim, wherein the reinforcement rib (148) is secured to and is either vertically or angularly disposed with respect to the plurality of horizontal ribs (146).

4. The heat exchanger assembly (100, 100a) as claimed in any of the preceding claims, wherein the rectangular frame (144) is of the same thickness as the horizontal rib (146) or the reinforcement rib (148), wherein thickness is measured parallelly with respect to the general plane formed either by inner face (142a) or the outer face (142b).

5. The heat exchanger assembly (100, 100a) as claimed in claim 4, wherein the rectangular frame (144) is of thickness that is greater than the thicknesses of the horizontal rib (146) or the reinforcement rib (148).

6. The heat exchanger assembly (100, 100a) as claimed in claim 4, wherein the rectangular frame (144) is of thickness that is greater than the sum of thicknesses of the horizontal rib (146) and the reinforcement rib (148).

7. The heat exchanger assembly (100, 100a) as claimed in any of the preceding claims, wherein spacing between the adjacent horizontal ribs (146) corresponds to spacing between the adjacent tubes (130).

8. The heat exchanger assembly (100, 100a) as claimed in claim 7, wherein the horizontal ribs (146) overlap the adjacent tubes (130).

9. The heat exchanger assembly (100, 100a) as claimed in any of the preceding claims, wherein the frame (144) at least partially overlaps the ends of the tubes (130).

10. The heat exchanger assembly (100, 100a) as claimed in any of the preceding claims, wherein the frame (144) at least partially overlap the manifolds (120a, 120b).

11. The heat exchanger assembly (100, 100a) as claimed in any of the preceding claims, wherein the tubes (130), the first manifold (120a) and the second manifold (120b) of the heat exchanger (110) and the protection grid (140, 140a) are of metal.

12. The heat exchanger assembly (100, 100a) as claimed in the previous claim, wherein the tubes (130), the first manifold (120a) and the second manifold (120b) of the heat exchanger (110) and the protection grid (140, 140a) are of either aluminum or aluminum alloy.

13. The heat exchanger assembly (100, 100a) as claimed in any of the preceding claims, wherein at least one of the horizontal ribs (146) is aligned to and brazed to at least one of the corresponding tubes (130) to secure the protection grid (140, 140a) over the heat exchanger (110).

14. The heat exchanger assembly (100, 100a) as claimed in any of the preceding claims, wherein the rectangular frame (144) is brazed to at least one of the first manifold (120a), the second manifold (120b) and at least one of the tubes (130) to secure the protection grid (140, 140a) over the heat exchanger (110).

15. The heat exchanger assembly (100, 100a) as claimed in any of the preceding claims, wherein the rectangular frame (144) further comprises at least one pair of tabs (144a, 144b) disposed on opposite sides thereof and adapted to engage with corresponding engagement elements configured on at least one of the first manifold (120a) and the second manifold (120b) to position and securely mount the protection grid (140, 140a) over the heat exchanger (110).

16. The heat exchanger assembly (100, 100a) as claimed in claim 15, wherein the pair of tabs (144a, 144b) is adapted to be engageably received within space between the adjacent tubes (130) to position and securely mount the protection grid (140, 140a) over the heat exchanger (110).
